Europäisches Patentamt

(19) European Patent Office

Office européen des brevets

(11) Numéro de publication: **0 275 853**
A1

# (12) DEMANDE DE BREVET EUROPEEN

(21) Numéro de dépôt: 87870052.5

(22) Date de dépôt: 16.04.87

(51) Int. Cl.⁴: **G 09 B 29/10,** G 08 G 1/09, G 06 F 15/48

(30) Priorité: 07.11.86 BE 905721

(43) Date de publication de la demande: **27.07.88**
**Bulletin 88/30**

(84) Etats contractants désignés: **AT CH DE ES FR GB GR IT LI LU NL SE**

(71) Demandeur: **DE ROUCK, Nouvelles Edition Cartografiques S.A., Place de la Reine 23, B-1030 Bruxelles (BE)**

(72) Inventeur: **DE ROUCK, Nouvelles Edition Cartografiques S.A., Place de la Reine 23, B-1030 Bruxelles (BE)**

(54) **Appareil d'optimalisation multi-dimensionnelle de routings.**

(57) Un appareil d'optimalisation des routings permet d'optimaliser les routings, les tournées, les déplacements ou toute mise en rapport d'un ou plusieurs lieux, espaces, places et zones. Il comprend au moins un appareil de calcul et optimalise les routings par le traitement de différentes données telles que, lieux, distances, unités de mesure... La précision de l'optimalisation peut être accentuée par la prise en compte de différents facteurs tels que difficultés, obstacle, fluidité, trafic et autres indices ayant une influence directe ou indirecte sur le parcours de distances, le temps pris par le parcours de ces distances, le choix des routes, voies ou chemins à suivre. Les résultats comportent au moins un classement ou une organisation des points ou zones et des distances pouvant être localisés ou situés sur une carte routière, géographique, plan de ville, dessin, schéma, photo ou représentation d'espace.

Les résultats comportent également l'indication de n'importe quel facteur pouvant influencer le temps pris pour effectuer le ou les parcours ainsi que n'importe quel facteur pouvant influencer le choix des routes, voies ou chemins à emprunter. Les résultats sont fournis sur papier, visuellement, auditivement ou sur tour support informatique.

<u>Appareil d'optimalisation multi-dimensionnelle de routings.</u>

L'invention concerne un appareil d'optimalisation de routings, de distances, de tout déplacement ou de mise en rapport de deux ou plusieurs distances. L'appareil comprend au moins un appareil de calcul. Actuellement le choix des déplacements dans un ordre optimal des routings, tournées ou tout déplacement se fait manuellement et arbitrairement, sur base d'expériences empiriques et personnelles. Avec l'appareil d'optimalisation de routings, les distances, temps et autres résultats pouvant découler d'un déplacement ou simple mise en rapport de lieux, zones ou places sont calculés logiquement, par les voies les plus économiques, sur base de données concrètes ou abstraites, des variables, mathématiques, algorithmes ou toute donnée de distances, temps, vitesse et tout autre élément de nature à influencer les routings pouvant être traitée par un instrument de calcul les résultats étant fournis au demandeur sur papier, visuellement, auditivement ou sur tout support informatiques.

L'optimalisation est exécutée par l'appareil de calcul par la mise en rapport des lieux, places, espaces, distances et autres données matérielles et/ou intellectuelles de nature d'organisation de déplacements dont on veut trouver la ou les chemins, parcours, routings optimaux et/ou organisés suivant certaines organisations ou impératifs. Les résultats de ces calculs ou traitements logiques comportent au moins un classement logique ou une organisation des points ou zones et des distances pouvant être localisés ou situés sur une carte routière, géographique, plan de ville, dessin, schéma, photo ou toute représentation d'espace. Les résultats peuvent également être des sommes, des résultats de parcours, des calculs de frais, des calculs de rapport ou tout autre calcul de rentabilité, de perte donnant des critères d'appréciation ou toute statistique pouvant découler de la mise en rapport d'au moins un ou de plusieurs lieux, de toute visite commerciale, privée ou de tout déplacement.

Revendications.

1.  Appareil pour optimalisation des routings, des distances de tout déplacement ou de mise en rapport d'une ou plusieurs distances, vitesses et/ou temps.

Un appareil d'optimalisation de routings comprend au moins un appareil de calcul utilisant des distances, des lieux, places ou zones et/ou unités de mesure tels que vitesse, temps, heures, périodicités etc. Les résultats comportent au moins un classement ou une organisation des points ou zones et des distances pouvant être localisés ou situés sur une carte routière, géographique, plan de ville, dessin, schéma, photo ou représentation d'espace.

Les résultats comportent aussi des indices définissant une voie reliant d'autres voies et espaces - le temps et les indices définissant des difficultés, obstacles, fluidité, trafic et distances ou autres facteurs ayant une influence directe ou indirecte sur le parcours de distances, le temps pris par le parcours de ces distances, le choix des routes, voies ou chemins à suivre.

Les résultats sont fournis sur papier, visuellement, auditivement ou sur tout support informatique.

**Office européen des brevets**

# RAPPORT DE RECHERCHE EUROPEENNE

Numero de la demande

EP  87 87 0052

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 169 954  (JODON DE VILLEROCHE) <br> * page 1, lignes 6-18; page 3, ligne 3 - page 8, ligne 9; page 11, ligne 6 - page 12, ligne 6; page 18, ligne 11 - page 21, ligne 5; figure 1 * <br> --- | 1 | G 09 B  29/10 <br> G 08 G   1/09 <br> G 06 F  15/48 |
| X | FR-A-2 525 002  (NAUD) <br> * page 1, ligne 1 - page 3, ligne 22; revendications 1-3; figure 1 * <br> --- | 1 | |
| X | FR-A-2 382 728  (THOME) <br> * page 1, ligne 1 - page 6, ligne 25 * <br> --- | 1 | |
| X | EP-A-0 029 201  (SIEMENS) <br> * page 1, ligne 5 - page 5, ligne 24; figure 1 * <br> --- | 1 | |
| X | US-A-4 301 506  (TURCO) <br> * abrégé * <br> --- | 1 | |
| X | US-A-4 360 875  (BEHNKE) <br> * abrégé * <br> ----- | 1 | **DOMAINES TECHNIQUES RECHERCHES (Int. Cl.4)** <br><br> G 09 B <br> G 08 G <br> G 06 F |

Le présent rapport a été établi pour toutes les revendications

| Lieu de la recherche | Date d'achèvement de la recherche | Examinateur |
|---|---|---|
| BERLIN | 05-02-1988 | BEITNER M.J.J.B. |